# EUROPEAN PATENT SPECIFICATION

(11) **EP 0 506 348 B1**
(45) Date of publication and mention of the grant of the patent: **12.06.1996**
(21) Application number: 92302545.6
(22) Date of filing: 25.03.1992
(51) Int. Cl.: B32B 27/32, B32B 27/34

(54) **Medical film comprising polyamide**
Polyamide enthaltender medizinischer Film
Film à usage médical, contenant du polyamide

(30) Priority: 25.03.1991 US 674845; 11.03.1992 US 846157
(43) Date of publication of application: 30.09.1992
(73) Proprietor: W.R. Grace & Co.-Conn., New York, New York 10036 (US)
(72) Inventor: Mueller, Walter Berndt, Inman South Carolina 29349 (US)
(74) Representative: Bentham, Stephen

(56) References cited:
- EP-A- 214 945
- EP-A- 228 819
- EP-A- 0 258 527
- EP-A- 0 302 357
- EP-A- 0 380 145
- EP-A- 0 444 954
- EP-A- 0 446 505

## Description

This invention relates to autoclavable flexible films suitable for the packaging of medical solutions.

Currently, it is common medical practice to supply liquids such as medical solutions for parenteral administration in the form of disposable, flexible pouches. These pouches should be characterized by collapsibility, transparency, and adequate mechanical strength. They must also be able to resist the relatively high temperatures required for heat sterilization of their contents, for example in an autoclave. Typically, medical solutions and the like are autoclaved at about 123°C (253°F) for periods of 15 to 30 minutes.

Presently, such flexible pouches are typically made from a highly plasticized polyvinyl chloride. While meeting the requirements mentioned above, polyvinyl chloride may have some undesirable properties for use as a medical solution pouch because of the possibility of migration of plasticizer from the polyvinyl chloride into the medical solution or the other contents of the pouch so that the solution may become contaminated by potentially toxic material. A question has also arisen concerning whether PVC is adequately chemically neutral to medical solutions. It has also been found that polyvinyl chloride becomes brittle at relatively low temperatures.

Embrittlement and stress-cracking, particularly of the outer surface of medical pouches, has been found to occur in other non-PVC pouches. It is desirable to provide a pouch for the packaging of medical solu tions which substantially reduces or eliminates stress-cracking and embrittlement of the pouch material.

Materials for medical packaging should possess sufficient strenght to withstand processing steps during manufacture, conversion into pouches, retorting, distribution and handling.

When packaging medical solutions, the amount of extractables in the medical solution derived from the packaging material must be strictly controlled. A medical solution is also often pH sensitive, and the pH of the solution must also be kept within strict limits. The pH of the solution can shift, i.e. become more acidic or basic, as a result of the migration of substances from the packaging material into the solution during retorting or storage.

The inventor has found that using polyamides, such as those disclosed herein, for the outer layer of a film results in a strong film with better pH stability in a medical solution contained in a container made from the film, than a comparable film with a copolyester outer layer.

Of interest is U.S. Patent 4,401,536 issued to Lundell et al which discloses the use of a blend of medical grade radiation-stabilized polypropylene and a copolymer of ethylene and a comonomer selected from the group consisting of vinyl esters of saturated carboxylic acids and alkyl esters of alpha, beta ethylenically unsaturated carboxylic acids, the blend being irradiated.

Also of interest is U.S. Patent 4,643,926 issued to Mueller which discloses a flexible film for medical solution pouches generally including a sealant layer of ethylene propylene copolymer, modified ethylene propylene copolymer, or flexible copolyester; one or more interior layers including elastomeric polymeric materials such as very low density polyethylene; and an outer layer of ethylene propylene copolymer or a flexible copolyester.

Also of interest is U.S. Patent 4,726,997 issued to Mueller et al which discloses a chemically stabilized film in which extractables are controlled by the use of a high molecular weight stabilizer in a copolyester layer, and solution pH is controlled by the addition of a carbonate of an alkali metal to a modified ethylene vinyl acetate copolymer.

Also of interest are U.S. Patent 4,803,102 and EP-A-0,228,819 which disclose a multiple layer film having a first layer of a polyester, polycarbonate, or polyether block amide copolymer; an adhesive layer; and a layer of polypropylene polymer blended with an elastomeric styrene ethylene butylene styrene copolymer.

EP-A-0,214,945 discloses thermoplastic films and bag structures comprising a film layer comprising a blend of polypropylene copolymer and a material selected from polyisobutylene, very low density polyethylene, polybutylene and ethylene-methyl acrylate copolymer, and mixtures thereof.

EP-A-0,258,527 discloses a packaging laminate which is heat sealable to provide a strong seal which is clearly peelable. A heat sealable surface layer is composed of a melt blend comprising substantially linear polyolefin and polyolefin rubber.

An object of the present invention is to provide a film suitable for the packaging of medical solutions characterised by high mechanical strength.

Another object of the present invention is to provide a film suitable for the packaging of medical solutions, the film having the effect of reducing pH shift in medical solutions contained in containers made from the film.

The term "polyamide" is used herein to mean resin commonly designated as nylon. Typically, in the conventional method, some polyamide resins are made by condensation of equimolar amounts of a saturated dicarboxylic acid containing from about 2 to 10 carbon atoms with an alkylene diamine, in which the alkylene group contains from about 2 to 10 carbon atoms. Excess diamine may be used, thereby giving an excess of amine end groups over carboxyl end groups in the polyamide. Other polyamide resins are polymerized by addition reactions of ring compounds that contain both acid and amine groups on the monomer. Copolyamides are also included herein in the term "polyamide". The polyamides according to the invention are nylon 66, nylon 610, nylon 66/610, nylon 12 and copolymers thereof, and nylon 11 and copolymers thereof. Polyamides containing a substantial percentage of caprolactam are less desirable, and in some cases unsuitable, in medical film applications, because the caprolactam can extract into the medical product to be packaged. Polyetheramide block copolymers are excluded from this definition.

The terms "flexible" and "elastomeric" are used herein to define specific polymeric materials as well as characteristics of a resulting pouch or bag whereby improved flexibility and/or collapsibility of the pouch or bag is obtained by the use of these specific polymeric materials. Flexible materials may be characterized by a modulus of preferably less than 50,000 PSI (ASTM D-882-81) and more preferably less than 40,000 PSI (ASTM D-882-81).

The term "film" refers to a thermoplastic material suitable for packaging and having one or more layers of polymeric materials which may be bonded by any suitable means well known in the art.

The term "polymer", "polymeric", unless specifically defined or otherwise limited, generally includes homopolymers, copolymers and terpolymers and blends and modifications thereof.

The term "interior" is used herein to refer to a layer of a multilayer film which is not a skin or surface layer, or sealant layer, of the film.

The term "melt index" is used herein as the amount, in grams, of a thermoplastic resin which can be forced through a given orifice under a specified pressure and temperature within 10 minutes. The value should be determined in accordance with ASTM D 1238-82, Condition E.

The term "ethylene vinyl acetate copolymer" (EVA) is used herein to refer to a copolymer formed from ethylene and vinyl acetate monomers wherein the ethylene derived units in the copolymer are present in major amounts and the vinyl acetate derived units in the copolymer are present in minor amounts.

The term "ethylene propylene copolymer" (EPC) is used herein to refer to a copolymer formed of propylene monomer and minor amounts, usually less than 10% and preferably less than 6% by weight, of ethylene comonomer. This may be a high melt flow EPC, although it does not have to be unless designated as such in this specification or the claims attached hereto.

The term "modified" is used herein to refer to a polymeric material in which some or all of the substituents are replaced by other materials, providing a change in properties such as improved impact resistance, flexibility or elastomeric properties. In the case of modified ethylene propylene copolymer, the modification is provided by a rubbery block copolymer such as commercially available under the trademark Kraton from the Shell Chemical Company.

The term "elastomer" is used herein to mean a elastomeric, rubbery or flexible material suitable for use in one or more layers of the present invention. Elastomers used in the invention are styrene ethylene butylene styrene copolymer (SEBS), styrene butadiene styrene copolymer (SBS), styrene isoprene styrene copolymer (SIS), and ethylene propylene rubber (EPR).

The term "polyolefin" is used herein to refer to olefin polymers and copolymers, especially ethylene polymers and copolymers, and to polymeric materials having at least one olefinic comonomer, such as ethylene vinyl acetate copolymer and ionomer.

The present invention provides a film comprising:
a) a first outer layer comprising a blend of a ethylene propylene copolymer and an elastomer which is:
   i) styrene ethylene butylene styrene copolymer;
   ii) styrene butadiene styrene copolymer;
   iii) styrene isoprene styrene copolymer; or
   iv) ethylene propylene rubber;
b) a second outer layer comprising a polyamide which is nylon, a copolymer of nylon 12, nylon 11, a copolymer of nylon 11, nylon 66, nylon 610, or nylon 66/610 copolymer;
c) optionally, an interior layer disposed between the first and second outer layers and comprising a polyolefin; and
d) a polymeric adhesive layer disposed between and adhering either the first and second outer layers or the interior and second outer layers.

The invention further provides a method comprising:
a) providing a blend of an ethylene propylene copolymer and an elastomer which is:
   a) styrene ethylene butylene styrene copolymer;
   b) styrene butadiene styrene copolymer;
   c) styrene isoprene styrene copolymer; or
   d) ethylene propylene rubber; and
b) extruding
   i) a first melt stream of the blend of a),
   ii) a second melt stream of a polymeric adhesive, and
   iii) a third melt stream of a polyamide which is nylon 12, a copolymer of nylon 12, nylon 11, a copolymer of nylon 11, nylon 66, nylon 610, or nylon 66/610 copolymer, to form a film
The invention further provides a method of making a film comprising:
a) providing a blend of an ethylene propylene copolymer and an elastomer which is:
   i) styrene ethylene butylene styrene copolymer;
   ii) styrene butadiene styrene copolymer;
   iii) styrene isoprene styrene copolymer; or
   iv) ethylene propylene rubber; and
b) extruding
   i) a first melt stream of the blend of a),
   ii) a second melt stream of a polyolefin,
   iii) a third melt stream of a polymeric adhesive, and
   iv) a fourth melt stream of a polyamide which is nylon 12, a copolymer of nylon 12, nylon 11, a copolymer of nylon 11, nylon 66, nylon 610, or nylon 66/610 copolymer, to form a film.

The invention yet further provides a medical pouch comprising a film of the invention.

The invention can be further understood by reference to the drawings, in which:
Figure 1 is a schematic cross-sectional view of an embodiment of the invention;
Figure 2 is a schematic cross-sectional view of another embodiment of the present invention; and
Figure 3 is a schematic cross-sectional view of another embodiment of the present invention.

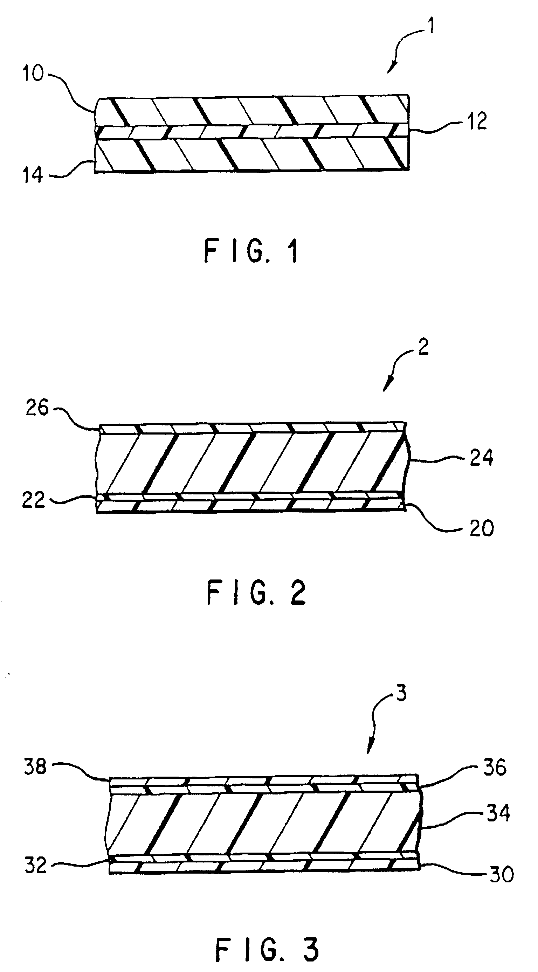

Figure 1 shows a three layer film 1 in accordance with the present invention. Sealant layer 10 comprises a blend of an ethylene propylene copolymer (EPC) and an elastomer such as a styrene ethylene butylene styrene copolymer (SEBS). A suitable EPC resin is Z 9550 from Fina, or PLTD 665 from Exxon. The Fina material has an ethylene content of about 6.0%. Both EPC resins have a melt flow of about 10 grams/10 minutes (ASTM D 1238, Condition L). Other high melt flow (5 to 15 grams/10 minutes at ASTM D 1238, Condition L) ethylene propylene copolymers, and polypropylenes (PP) can be used, as well as lower melt flow EPC and PP materials. The elastomer is preferably a styrene eythyle butylene styrene copolymer (SEBS). The SEBS is preferably Kraton G 1652. This particular material may be regarded as a thermoplastic rubber, and also as a block copolymer with polystyrene end blocks and a rubbery polyethylene butylene mid-block. A preferred blend range for sealant layer 10 includes between about 70% and 95% EPC and between about 5% and 30% of an elastomer.

Other suitable elastomers for sealant layer 10 include styrene butadiene styrene copolymer, styrene isoprene styrene copolymer, and ethylene propylene rubber.

Outer layer 14 comprises a polyamide such a nylon 66/610 copolymer. A commercial resin is available from EMS under the designation XE 3303. Other copolyamides and polyamides can also be used for layer 14, including nylon 66, nylon 610, nylon 12 and copolymers thereof, and nylon 11 and copolymers thereof.

Adhesive layer 12, disposed between the two outer layers 10 and 14, comprises a polymeric adhesive which is disposed between and serves to bond the blend layer to the polyamide layer. In this embodiment, the central polymeric adhesive layer is preferably a thin layer relative to the two outer layers.

Adhesive layer 12 is a polymeric adhesive such as a modified ethylene methyl acrylate copolymer or modified ethylene vinyl acetate copolymer. Certain ethylene unsaturated ester copolymers, unmodified, may also be suitable for layer 12 in order to bond the sealant layer 10 to outer polyamide layer 14.

In addition, other polymeric adhesive materials may be suitable for layer 12 as well as the adhesive layers of other embodiments of the present invention. The choice of these adhesive materials depends on the selection of resins for the remaining layers of the film structure, in particular the resin layers which will be bonded by the adhesive layer. These additional adhesives are preferably chemically modified adhesives, often with acid or acid anhydride functionalities, and include chemically modified versions of the following; linear low density polyethylene, very low density polyethylene, high density polyethylene and polypropylene.

Suitable chemically modified adhesives include Bynel} E 361 and E374 available from du Pont, and Plexar} 3382 available from Quantum/USI. The Bynel E 361 material is an EVA based polymeric adhesive with maleic anhydride graft copolymer. The Bynel E 374 material is an EMA based polymeric adhesive with maleic anhydride graft copolymer. The Plexar 3382 material is a EMA based chemically modified polymeric adhesive with maleic anhydride graft copolymer.

Also suitable for layer 12 is modified styrene ethylene butylene styrene copolymer available from Shell Chemical Company as Kraton{ FG 1901X rubber.

Figure 2 shows a four layer film 2 made in accordance with the present invention. Outer layer 26 is preferably the blend of EPC and the elastomer material described for sealant layer 10 of the three layer structure.

Interior layer 24 comprises an olefinic polymer or copolymer, such as ethylene vinyl acetate copolymer (EVA), ethylene methyl acrylate copolymer (EMA), or blends of EVA and EMA. Preferably, the EVA has a vinyl acetate content of between about 18% and 35% by weight of the EVA. Even more preferably, the EVA has a vinyl acetate content of about 28% by weight of the EVA. Several commercially available EVA resins are suitable for intermediate layer 24. These include Elvax 3175 having a melt index of 6 and a 28% vinyl acetate content by weight of the EVA. Also useful is Elvax 3182, a 3 melt index resin with a vinyl acetate content of about 28% by weight of the EVA. Both of these resins are available from du Pont. Additionally, Exxon 767.36 (2.5 melt index, 30% vinyl acetate) and Exxon 760.36 (3 melt index, 27.5% vinyl acetate) are also suitable for intermediate layer 12. The intermediate layer 24 comprises preferably between 60 and 90% and more preferably about 80% of the total film thickness.

Interior layer 24 can also be an ionomer, or a blend of ionomer and EVA. A preferred blend is 75% EVA and 25% ionomer. A preferred range of the blend is 50% to 96% EVA, and 4% to 50% ionomer. A suitable commercially available ionomer is Surlyn (TM), such as Surlyn 1707, available from DuPont.

Adhesive layer 22 comprises a polymeric adhesive such as those described above for adhesive layer 12.

The second outer layer 20 is a polyamide such as that desribed earlier for outer layer 14.

Optionally, an additional polyolefinic layer can be included in the film structure, such as EVA or other materials such as those described earlier, or a very low density polyethylene (VLDPE) such as DEFD 1362 available from Union Carbide. If VLDPE is present as an additional layer, an adhesive layer is normally required to bond it to the sealant layer. This adhesive layer can comprise any suitable resin. Preferably, it comprises a blend of VLDPE and the material of the sealant layer. More preferably, it comprises a blend of about 50% VLDPE and 50% of the sealant layer material.

Figure 3 illustrates such a film 3.

Outer layer 38 is preferably the blend of EPC and the elastomer material described for sealant layer 10 of the three layer structure.

A first adhesive layer 36 comprises any suitable polymeric adhesive, preferably a blend of VLDPE and the material of the sealant layer.

Interior layer 34 comprises VLDPE.

Adhesive layer 32 comprises a polymeric adhesive such as those described above for edhesive layer 12.

The second outer layer 30 is a polyamide such as that desired earlier for outer layer 14.

### EXAMPLES

Exemplary multi-layer structures of Examples 1 through 8 are cast coextruded and irradiated. These structures are viewed as potential replacements for polyvinyl chloride bags. Examples 1 through 8, in part reflected in the detailed description of the preferred embodiments hereinbefore described, are discussed below with their respective formulations. The structure for each example begins with the inside or sealant layer, and ends with the outside layer. The Examples include the following materials:
- EPC₁: =: PLTD 665
- SEBS₁: =: Kraton G 1652
- EVA₁: =: Elvax 3182-2
- Adhesive₁ =: Bynel E 361
- Adhesive₂ =: Bynel E 374
- polyamide₁ =: XE 3303
- PO₁=: polyolefin
- VLDPE₁ =: DEFD 1362
In Example 1, the multi-layer film comprised 80% EPC₁ + 20% SEBS₁/Adhesive₁/polyamide₁.

In Example 2, the multi-layer film comprised the same construction as the film of Example 1, but with Adhesive₂ as the adhesive layer.

In Example 3 a multi-layer film comprised 80% EPC₁ + 20% SEBS₁/EVA₁/Adhesive₁/polyamide₁.

In Example 4, the multi-layer film comprised the same construction as the film of Example 3, but with Adhesive₂ as the adhesive layer.

In Example 5 a multi-layer film comprised 80% EPC₁ + 20% SEBS₁/75% EVA₁ + 25% PO₁/Adhesive₁/polyamide₁.

In Example 6, the multi-layer film comprised the same construction as the film of Example 5, but with Adhesive₂ as the adhesive layer.

In Example 7 a multi-layer film comprised 80% EPC₁ + 20% SEBS₁/50%VLDPE₁+40%EPC₁+10%SEBS₁/VLDPE₁/Adhesive₁/polyamide₁.

In Example 8, the multi-layer film comprised the same construction as the film of Example 7, but with Adhesive₂ as the adhesive layer instead of Adhesive₁.

In each of the Examples, .1% of an antioxidant, AO 330 made by Ethyl, is included in the sealant layer. Thus, the actual per cent of EPC in the sealant layer of the examples is actually about 79.9%.

In Examples 5 and 6, suitable polyolefins can be included in varying amounts, ranging from 1% to 99%, in the second layer. The choice of resins will depend on factors such as specific end use, cost, and availability.

Films in accordance with the present invention are preferably cross-linked. This is preferably done by irradiation, i.e. bombarding the film with particulate and non-particulate radiations such as high energy electrons from an accelerator or cobalt-60 gamma rays, to cross-link the materials of the film. Cross-linking increases the structural strength of film and/or the force at which the material can be stretched before tearing apart, and may also improve the optical properties of the film and change the high temperature properties of the film. A preferred irradiation dosage level is in the range of from about 2 Megarads (M.R.) to about 8 M.R. Electronic cross-linking can be accomplished by curtain beam irradiation.

Cross-linking may also be accomplished chemically e.g. by the use of peroxides.

Pouches made in accordance with the present invention may be sealed by various means well known in the art, including radiation frequency (R.F.) sealing, impulse and hot bar sealing.

The films according to the present invention are preferably formed by cast coextrusion as a tubular film. Containers for medical applications, or other desired end uses can be made directly from the coextruded, tubular film, or alternatively from rollstock material obtained from the tube after it has been slit and ply separated. A hot blown process can also be used to make the film, although optical properties of the resulting pouch would be inferior to those from a cast coextrusion process. Other processes, such as extrusion coating, conventional lamination, slot die extrusion, etc. can also be used to make the film of the present invention, although these alternative processes can be more difficult or less efficient than the preferred method.

It should be noted that the detailed description and specific examples which indicate the presently preferred embodiments of the invention are given by way of illustration only.

## Claims

1. A film comprising:
a) a first outer layer comprising a blend of a ethylene propylene copolymer and an elastomer which is:
i) styrene ethylene butylene styrene copolymer;
ii) styrene butadiene styrene copolymer;
iii) styrene isoprene styrene copolymer; or
iv) ethylene propylene rubber;
b) a second outer layer comprising a polyamide which is nylon 12, a copolymer of nylon 12, nylon 11, a copolymer of nylon 11, nylon 66, nylon 610, or nylon 66/610 copolymer;
c) optionally, an interior layer disposed between the first and second outer layers and comprising a polyolefin; and
d) a polymeric adhesive layer disposed between and adhering either the first and second outer layers or the interior and second outer layers.

2. A film according to claim 1, wherein the elastomer is styrene ethylene butylene copolymer.

3. A film according to claim 1 or 2 wherein the first outer layer comprises a blend of 70% to 95% ethylene propylene copolymer, and 5% to 30% of an elastomer.

4. A film according to claim 1, 2 or 3 wherein the polymeric adhesive comprises a chemically modified polymeric adhesive which is:
a) modified ethylene vinyl acetate copolymer;
b) modified ethylene methyl acrylate copolymer;
c) modified linear low density polyethylene;
d) modified very low density polyethylene;
e) modified high density polyethylene;
f) modified polypropylene;
g) modified styrene ethylene butylene styrene copolymer;
or
h) modified ethylene propylene rubber.

5. A film according to claim 1 of the preceding claims wherein the polyamide is nylon 66/610 copolymer.

6. A film according to any one of the preceding claims comprising an interior polyolefin layer in which the polyolefin is:
a) ethylene vinyl acetate copolymer;
b) ethylene methyl acrylate copolymer;
c) a blend of ethylene vinyl acetate copolymer and a second polyolefin;
d) very low density polyethylene;
e) ionomer; or
f) a blend of ionomer and ethylene vinyl acetate copolymer.

7. A film according to claim 8 comprising ethylene vinyl acetate copolymer having a vinyl acetate content from 18% to 35% by weight of the ethylene vinyl acetate copolymer.

8. A film according to claim 6 wherein the interior layer comprises a very low density polyethylene; and which comprises:
a) a first polymeric adhesive layer disposed between and adhering the interior layer to the first outer layer; and
b) a second polymeric adhesive layer disposed between and adhering the interior layer to the second outer layer.

9. A film according to claim 8 wherein the first polymeric adhesive comprises a blend of very low density polyethylene, and the blend of the first outer layer.

10. A method of making a film comprising:
a) providing a blend of an ethylene propylene copolymer and an elastomer which is:
a) styrene ethylene butylene styrene copolymer;
b) styrene butadiene styrene copolymer;
c) styrene isoprene styrene copolymer; or
d) ethylene propylene rubber; and
b) extruding
i) a first melt stream of the blend of a),
ii) a second melt stream of a polymeric adhesive, and
iii) a third melt stream of a polyamide which is nylon 12, a copolymer of nylon 12, nylon 11, a copolymer of nylon 11, nylon 66, nylon 610, or nylon 66/610 copolymer, to form a film.

11. A method of making a film comprising:
a) providing a blend of an ethylene propylene copolymer and an elastomer which is:
i) styrene ethylene butylene styrene copolymer;
ii) styrene butadiene styrene copolymer;
iii) styrene isoprene styrene copolymer; or
iv) ethylene propylene rubber; and
b) extruding
i) a first melt stream of the blend of a),
ii) a second melt stream of a polyolefin,
iii) a third melt stream of a polymeric adhesive, and
iv) a fourth melt stream of a polyamide which is nylon 12, a copolymer of nylon 12, nylon 11, a copolymer of nylon 11, nylon 66, nylon 610, or nylon 66/610 copolymer, to form a film.

12. A medical pouch comprising a film as claimed in any one of claims 1 to 9.

## Patentansprüche

1. Folie, umfassend:
(a) eine erste Außenschicht, die eine Mischung aus einem Ethylen-Propylen-Copolymer und einem Elastomer umfaßt, das:
i) Styrol-Ethylen-Butylen-Styrol-Copolymer,
ii) Styrol-Butadien-Styrol-Copolymer,
iii) Styrol-Isopren-Styrol-Copolymer oder
iv) Ethylen-Propylen-Kautschuk ist,
(b) eine zweite Außenschicht, die ein Polyamid umfaßt, das Nylon 12, ein Copolymer von Nylon 12, Nylon 11, ein Copolymer von Nylon 11, Nylon 66, Nylon 610 oder Nylon-66/610-Copolymer ist,
(c) gegebenenfalls eine Innenschicht, die zwischen der ersten und der zweiten Außenschicht liegt und ein Polyolefin umfaßt, und
(d) eine polymere Klebemittelschicht, die entweder zwischen der ersten und der zweiten Außenschicht oder zwischen der Innen- und zweiten Außenschicht liegt und diese verklebt.

2. Folie nach Anspruch 1, bei der das Elastomer Styrol-Ethylen-Butylen-Copolymer ist.

3. Folie nach Anspruch 1 oder 2, bei der die erste Außenschicht eine Mischung aus 70% bis 95% Ethylen-Propylen-Copolymer und 5% bis 30% eines Elastomers umfaßt.

4. Folie nach Anspruch 1, 2 oder 3, bei der das polymere Klebemittel ein chemisch modifiziertes polymeres Klebemittel umfaßt, das:
(a) modifiziertes Ethylen-Vinylacetat-Copolymer,
(b) modifiziertes Ethylen-Methylacrylat-Copolymer,
(c) modifiziertes lineares Polyethylen mit niedriger Dichte,
(d) modifiziertes Polyethylen mit sehr niedriger Dichte,
(e) modifiziertes Polyethylen mit hoher Dichte,
(f) modifiziertes Polypropylen,
(g) modifiziertes Styrol-Ethylen-Butylen-Styrol-Copolymer
oder
(h) modifizierter Ethylen-Propylen-Kautschuk ist.

5. Folie nach Anspruch 1, bei der das Polyamid Nylon-66/610-Copolymer ist.

6. Folie nach einem der vorhergehenden Ansprüche, die eine Polyolefininnenschicht umfaßt, in der das Polyolefin:
(a) Ethylen-Vinylacetat-Copolymer,
(b) Ethylen-Methylacrylat-Copolymer,
(c) eine Mischung aus Ethylen-Vinylacetat-Copolymer und einem zweiten Polyolefin,
(d) Polyethylen mit sehr niedriger Dichte,
(e) Ionomer oder
(f) eine Mischung aus Ionomer und Ethylen-Vinylacetat-Copolymer ist.

7. Folie nach Anspruch 8, die Ethylen-Vinylacetat-Copolymer umfaßt, das einen Vinylacetat-Gehalt von 18 bis 35 Gew.-% bezogen auf das Ethylen-Vinylacetat-Copolymer aufweist.

8. Folie nach Anspruch 6, bei der die Innenschicht ein Polyethylen mit sehr niedriger Dichte umfaßt, und die:
(a) eine erste polymere Klebemittelschicht, die zwischen der Innenschicht und der ersten Außenschicht liegt und diese verklebt, und
(b) eine zweite polymere Klebemittelschicht umfaßt, die zwischen der Innenschicht und der zweiten Außenschicht liegt und diese verklebt.

9. Folie nach Anspruch 8, bei der das erste polymere Klebemittel eine Mischung aus Polyethylen mit sehr niedriger Dichte und der Mischung der ersten Außenschicht umfaßt.

10. Verfahren zur Herstellung einer Folie, bei dem:
(a) eine Mischung aus einem Ethylen-Propylen-Copolymer und einem Elastomer bereitgestellt wird, das:
a) Styrol-Ethylen-Butylen-Styrol-Copolymer,
b) Styrol-Butadien-Styrol-Copolymer,
c) Styrol-Isopren-Styrol-Copolymer oder
d) Ethylen-Propylen-Kautschuk ist, und
(b)
i) ein erster Schmelzestrom der Mischung aus (a),
ii) ein zweiter Schmelzestrom eines polymeren Klebemittels und
iii) ein dritter Schmelzestrom eines Polyamids, das ein Nylon 12, ein Copolymer von Nylon 12, Nylon 11, ein Copolymer von Nylon 11, Nylon 66, Nylon 610 oder Nylon-66/610-Copolymer ist, unter Bildung einer Folie extrudiert werden.

11. Verfahren zur Herstellung einer Folie, bei dem:
(a) eine Mischung aus einem Ethylen-Propylen-Copolymer und einem Elastomer bereitgestellt wird, das:
i) Styrol-Ethylen-Butylen-Styrol-Copolymer,
ii) Styrol-Butadien-Styrol-Copolymer,
iii) Styrol-Isopren-Styrol-Copolymer oder
iv) Ethylen-Propylen-Kautschuk ist, und
(b)
i) ein erster Schmelzestrom der Mischung aus (a),
ii) ein zweiter Schmelzestrom eines Polyolefins,
iii) ein dritter Schmelzestrom eines polymeren Klebemittels und
iv) ein vierter Schmelzestrom eines Polymers, das Nylon 12, ein Copolymer von Nylon 12, Nylon 11, ein Copolymer von Nylon 11, Nylon 66, Nylon 610 oder Nylon-66/610-Copolymer ist, unter Bildung einer Folie extrudiert werden.

12. Medizinischer Beutel, der eine Folie gemäß einem der Ansprüche 1 bis 9 umfaßt.

## Revendications

1. Film comprenant :
a) une première couche extérieure comprenant un mélange d'un copolymère d'éthylène propylène et d'un élastomère qui est :
i) un copolymère de styrène éthylène butylène styrène;
ii) un copolymère de styrène butadiène styrène;
iii) un copolymère de styrène isoprène styrène; ou
iv) du caoutchouc d'éthylène propylène;
b) une deuxième couche extérieure comprenant un polyamide qui est du nylon 12, un copolymère de nylon 12, du nylon 11, un copolymère de nylon 11, du nylon 66, du nylon 610, ou un copolymère de nylon 66/610;
c) facultativement, une couche intérieure disposée entre les première et seconde couches extérieures et comprenant une polyoléfine; et
d) une couche polymère d'adhésif disposée entre et adhérant soit aux première et seconde couches extérieures soit à la couche intérieure et à la deuxième couche extérieure.

2. Film selon la revendication 1, caractérisé en ce que l'élastomère est un copolymère styrène éthylène butylène.

3. Film selon la revendication 1 ou 2, caractérisé en ce que la première couche extérieure comprend un mélange de 70% à 95% d'un copolymère éthylène propylène, et de 5% à 30% d'un élastomère.

4. Film selon la revendication 1, 2 ou 3, caractérisé en ce que l'adhésif polymère comprend un adhésif polymère chimiquement modifié qui est :
a) un copolymère modifié d'éthylène vinyl acétate;
b) un copolymère modifié d'éthylène méthyl acrylate;
c) un polyéthylène linéaire modifié à faible densité;
d) un polyéthylène modifié à très faible densité;
e) un polyéthylène modifié à haute densité;
f) du polypropylène modifié;
g) un copolymère modifié de styrène éthylène butylène styrène;
ou
h) du caoutchouc modifié d'éthylène propylène.

5. Film selon la revendication 1 des revendications précédentes, caractérisé en ce que le polyamide est un copolymère de nylon 66/610.

6. Film selon l'une quelconque des revendications précédentes comprenant une couche intérieure de polyoléfine dans laquelle la polyoléfine est :
a) un copolymère d'éthylène vinyl acétate;
b) un copolymère d'éthylène méthyl acrylate;
c) un mélange de copolymère éthylène vinyl acétate et d'une deuxième polyoléfine;
d) un polyéthylène très faible densité;
e) un ionomère; ou
f) un mélange d'ionomère et de copolymère éthylène vinyl acétate.

7. Film selon la revendication 8 comprenant un copolymère d'éthylène vinyl acétate ayant une teneur en vinyl acétate comprenant de 18% à 35% en poids du copolymère d'éthylène vinyl acétate.

8. Film selon la revendication 6 caractérisé en ce que la couche intérieure comprend un polyéthylène très faible densité; et qui comprend :
a) une première couche adhésive polymère disposée entre et adhérant la couche intérieure à la première couche extérieure; et
b) une deuxième couche d'adhésif polymère disposée entre et adhérant la couche intérieure à la deuxième couche extérieure.

9. Film selon la revendication 8 dans lequel l'adhésif polymère comprend un mélange de polyéthylène très faible densité, et le mélange de la première couche extérieure.

10. Procédé pour fabriquer un film consistant à :
a) prévoir un mélange d'un copolymère éthylène propylène et d'un élastomère qui est :
a) un copolymère de styrène éthylène butylène styrène;
b) un copolymère de styrène butadiène styrène;
c) un copolymère de styrène isoprène styrène; ou
d) un caoutchouc d'éthylène propylène; et
b) à extruder
i) un premier courant fondu du mélange de a),
ii) un deuxième courant fondu d'un adhésif polymère; et
iii) un troisième courant fondu d'un polyamide qui est le nylon 12, un copolymère d'un nylon 12, le nylon 11, un copolymère de nylon 11, le nylon 66, le nylon 610, ou bien un copolymère de nylon 66/610, pour former un film.

11. Procédé pour fabriquer un film consistant :
a) à prévoir un mélange d'un copolymère d'éthylène propylène et d'un élastomère qui est :
i) un copolymère de styrène éthylène butylène styrène;
ii) un copolymère de styrène butadiène styrène;
iii) un copolymère de styrène isoprène styrène; ou bien
iv) un caoutchouc d'éthylène propylène; et
b) à extruder :
i) un premier courant fondu du mélange de a),
ii) un deuxième courant fondu de polyoléfine,
iii) un troisième courant fondu d'adhésif polymère, et
iv) un quatrième courant fondu d'un polyamide qui est le nylon 12, un copolymère de nylon 12, le nylon 11, un copolymère de nylon 11, le nylon 66, le nylon 610, ou bien un copolymère de nylon 66/610, pour former un film.

12. Poche médicale comprenant un film tel que revendiqué dans l'une quelconque des revendications 1 à 9.
